# EUROPÄISCHE PATENTANMELDUNG

(11) **EP 1 591 193 A2**
(43) Veröffentlichungstag der Anmeldung: **02.11.2005**
(21) Anmeldenummer: 05006976.4
(22) Anmeldetag: 31.03.2005
(51) Int. Cl.: B23P 19/00, B23P 21/00, B62D 65/02

(54) **Vorrichtung zum automatischen Zu- und Abführen von Kfz-Baugruppen an Bestückungsstationen**

(30) Priorität: 27.04.2004 DE 102004020736
(71) Anmelder: SASIT Industrietechnik GmbH Zwickau, 08056 Zwickau (DE)
(72) Erfinder: Thieme Klaus, D-08058 Zwickau (DE)
(74) Vertreter: Auerbach, Bettina

(57) **Zusammenfassung**

Die Erfindung betrifft eine Vorrichtung zum automatischen Zu- und Abführen von Kfz-Baugruppen an Bestückungsstationen mit einer Übergabevorrichtung für die Bereitstellung unbestückter Baugruppen zur Bestückungsstation und für bestückte Baugruppen von der Bestückungsstation zu einer Station für die Ablage bestückter Baugruppen. Derartige Vorrichtungen werden für die Fabrikautomatisierung in der Kfz-Industrie benötigt.

Aufgabe ist es, einen unterbrechungsfreien Betrieb der Fügestation sicher zu stellen, wobei die einzelnen Stationen Schnittstellenfunktionen erfüllen sollen. Dazu ist zwischen der Bestückungsstation (1) und den Stationen (7, 8) für die Bereitstellung unbestückter Baugruppen sowie für die Ablage bestückter Baugruppen ein Shuttle (5) angeordnet, der Shuttle (5) ist auf einer einlinigen Fahrbahn (6) positioniert und mit eigenem Antrieb sowie einer Synchronisationseinrichtung (9) ausgestattet, auf dem Shuttle (5) ist ein Manipulator (10) zur Positionierung des Baugruppenträgers (3) angeordnet und der Manipulator (10) mit Einrichtungen für die dreidimensionale Bewegung des Baugruppenträgers (3) ausgestattet ist.

## Beschreibung

Die Erfindung betrifft eine Vorrichtung zum automatischen Zu- und Abführen von Kfz-Baugruppen an Bestückungsstationen mit einer Übergabevorrichtung für Baugruppen von Stationen für die Bereitstellung unbestückter Baugruppen zur Bestückungsstation und für bestückte Baugruppen von der Bestückungsstation zu einer Station für die Ablage bestückter Baugruppen. Derartige Vorrichtungen werden für die Fabrikautomatisierung in der Kfz-Industrie benötigt.

In der Kranfahrzeugindusthe setzt sich im Zuge der Fabrikautomation zunehmend die automatisierte Nestfertigung durch, mit der die teilautomatisierten Montagelinien ergänzt werden.
Mit der DE 43 13 407 C2 wird eine Montageanlage zum automatischen Fügen von vormontierten Bauteilen in Fahrzeugkarosserien beschrieben. Mit dieser technischen Lösung sollen die Nachteile des bis dahin bekannten Standes der Technik dadurch überwunden werden, daß zwischen der Fügestation und dem Bereitstellungsraum für vormontierte Bauteile ein Bauteilförderer angeordnet ist. Der Bauteilförderer übergibt dabei im mit der bewegten Fügestation synchronisierten Zustand das vormontierte Bauteil in die Fügestation. Der Nachteil dieser technischen Lösung besteht insbesondere darin, daß der Bauteilförderer als kreisförmig umlaufender Förderer ausgebildet ist, daß die Übergabe der Bauteile in die Fügestation durch eine in die Fügestation integrierte bewegliche Transportvorrichtung erfolgt und daß die Transportvorrichtung mehrere zu koordinierende Fahrwagen aufweist.

Die Aufgabe der Erfindung besteht deshalb in der Schaffung einer technischen Lösung, mit deren Hilfe die Mängel des bekannten Standes der Technik überwunden werden. Insbesondere soll eine Montagevorrichtung entwickelt werden, die kostengünstig realisierbar sein soll und die weitgehende Variabilität der zu versorgenden Fügestation nicht einschränkt. Außerdem soll durch einen zu gewährleistenden unterbrechungsfreien Betrieb der Fügestation eine hohe Produktivität der Fügestation sichergestellt werden. Außerdem sollen die Stationen für die Bereitstellung unbestückter Baugruppen und für die Ablage bestückter Baugruppen Schnittstellenfunktionen erfüllen können, indem sie als Puffer zwischen den vor- und nachgeschalteten Prozessen fungieren.

Danach besteht eine Vorrichtung zum automatischen Zu- und Abführen von Kfz-Baugruppen an Bestückungsstationen aus einer eigenen Fahrbahn für die Baugruppenträger, aus einer Übergabevorrichtung für Baugruppen von Stationen für die Bereitstellung unbestückter Baugruppen zur Bestückungsstation und für die Übergabe bestückter Baugruppen von der Bestückungsstation zu einer Station für die Ablage bestückter Baugruppen. Zwischen der Bestückungsstation und den Stationen für die Bereitstellung unbestückter Baugruppen sowie für die Ablage bestückter Baugruppen ist hierbei ein Shuttle angeordnet. Der Shuttle ist auf einer einspurigen Fahrbahn angeordnet und mit einem eigenen Antrieb ausgestattet. Der Shuttle verfügt weiterhin über eine Synchronisationseinrichtung, mit deren Hilfe der Gleichlauf des Shuttles mit den Einrichtungen der Bestückungsstation hergestellt wird. Weiterhin verfügt der Shuttle über einen Manipulator zur Positionierung des Baugruppenträgers. Indem der Manipulator mit Einrichtungen für die dreidimensionale Bewegung des Baugruppenträgers ausgestattet ist, kann er die Baugruppenträger programmgesteuert wahlweise von der Station für die Bereitstellung unbestückter Baugruppen übernehmen, auf dem Shuttle positionieren, auf der Bestückungsstation ablegen, von der Bestückungsstation die bestückten Baugruppenträger abnehmen und diese schließlich an der Station für die Ablage bestückter augruppen an diese übergeben.

In einer bevorzugten Ausführungsform ist der Manipulator wenigstens in seiner parallel zur Fahrbahn des Shuttles möglichen Bewegungsrichtung mit Einrichtungen für die Feinsynchronisation ausgestattet.

Dies ermöglicht es, den Shuttle zunächst mittels seines synchronisierbaren Antriebs schnell auf etwa die erforderliche Geschwindigkeit der Bauträgerbewegung in der Bestückungsstation zu beschleunigen und danach die vollständige Synchronisation der Feinsynchronisation des auf dem Shuttle angeordneten Manipulators zu überlassen.

Bevorzugt ist es auch vorgesehen, für die Übergabe und Übernahme von Baugruppenträgern zwischen dem Montagewagen der Bestückungsstation und dem Shuttle einen Übergabebereich anzuordnen. Lediglich in diesem Bereich ist es danach vorgesehen, Baugruppenträger vom Shuttle auf die Bestückungsstation zu übergeben oder durch den Manipulator von der Bestückungsstation abzunehmen.

Die Vorteile der Erfindung bestehen zusammengefaßt in der nun bestehenden Möglichkeit der kostengünstigen Realisierung der Verknüpfung von Montage-oder Fügestationen mit der vor- und nachgeschalteten Prozeßkette. Dies ist eine unverzichtbare Voraussetzung für die effiziente Einfügung von Nestfertigungen in die allgemeine Taktfertigung. Durch den Einsatz von Shuttles zwischen den Schnittstellen zum übrigen Prozeß in Form der Station für die Bereitstellung unbestückter Baugruppen und in Form der Station für die Ablage bestückter Baugruppen wird die wünschenswerte Entkopplung erreicht, die zu einer vergrößerten Redundanz der gesamten Prozeßkette beiträgt. Dies gestattet maximale Auslastungsgrade der Kapazität der jeweiligen Fügestation, unabhängig von zeitweiligen Störungen in den vor- und nachgeschalteten Prozeßstufen.
Mit der Dimensionierung der Aumahmcfähigkeit der Stationen für die Bereitstellung unbestückter Baugruppen und für die Ablage bestückter Baugruppen ist es möglich, die angestrebte Entkopplung und zugleich der pufferwirkung des gesamten Fertigungsnestes zu gewährleisten.

Die Erfindung soll nachstehend mit Ausführungsbeispielen näher erläutert werden.
In der beigefügten Zeichnung zeigen:
- Fig. 1: die schematische Draufsicht eines zwischen dem Montagewagen der Fügestation und den Stationen für die Bereitstellung unbestückter Baugruppen und für die Ablage bestückter Baugruppen angeordneten Shuttles;
- Fig. 2: die schematische Draufsicht eines Baugruppenträgers bei der Übernahme von der Station unbestückter Baugruppen auf den Shuttle;
- Fig. 3: die scheinatische Draufsicht eines Baugruppenträgers nach erfolgter Synchronisation von Shuttle und Montagewagen bei der Übergabe vom Shuttle auf den Montagewagen;
- Fig. 4: die schematische Draufsicht auf die gesamte Vorrichtung nach erfolgter Grobsynchronisation vor der Übernahme des Baugruppenträgers vom Montagewagen der Fügestation auf den Shuttle;
- Fig. 5: die schematische Draufsicht auf den bestückten Baugruppenträger bei der Übergabe vom Shuttle auf die Station für die Ablage bestückter Baugruppenträger.

### Ausführungsbeispiele

### Ausführungsbeispiel 1:

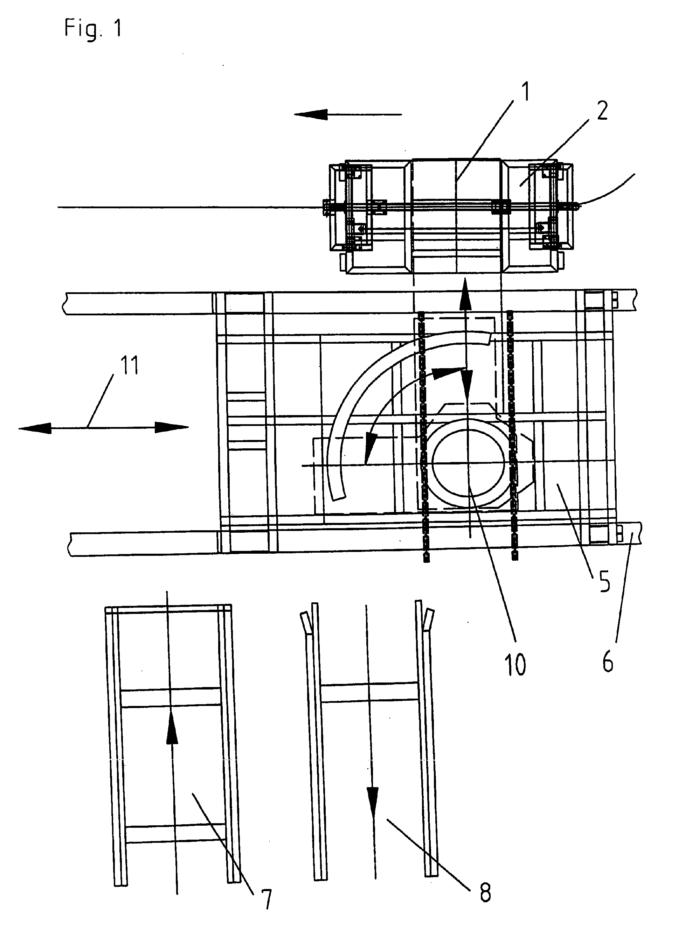

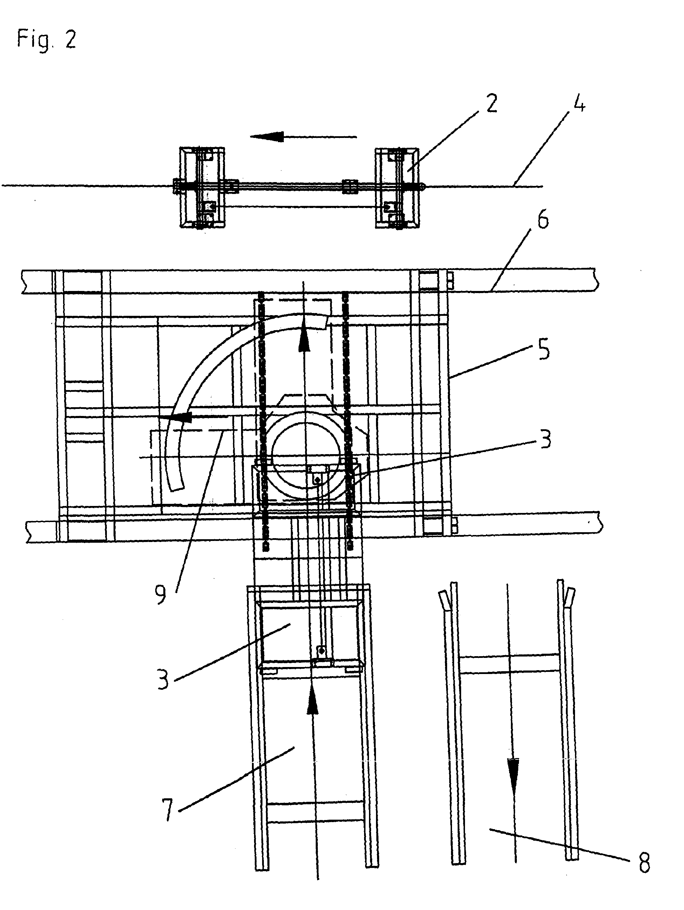

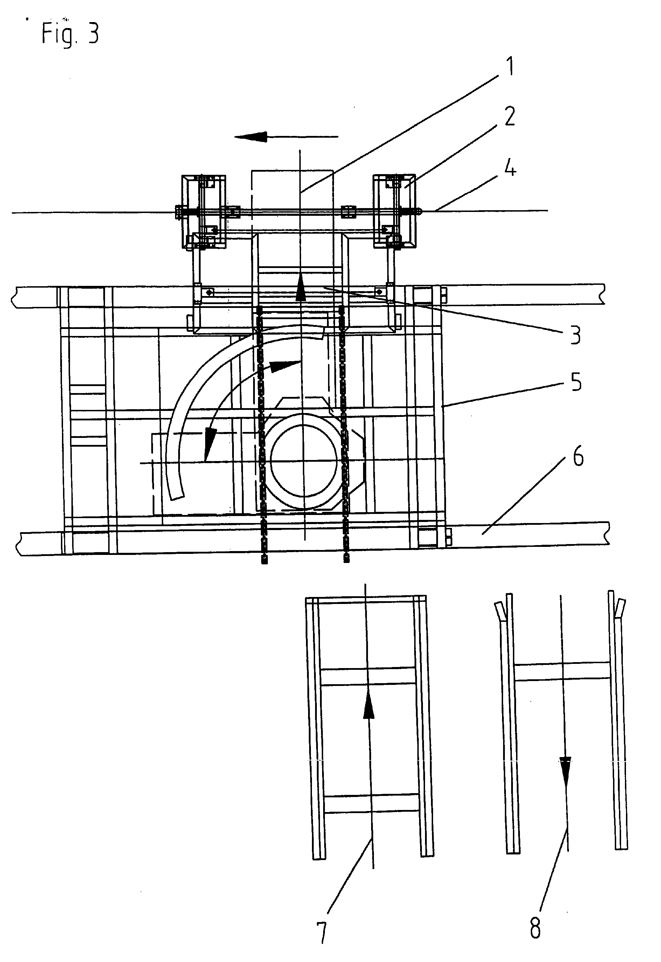

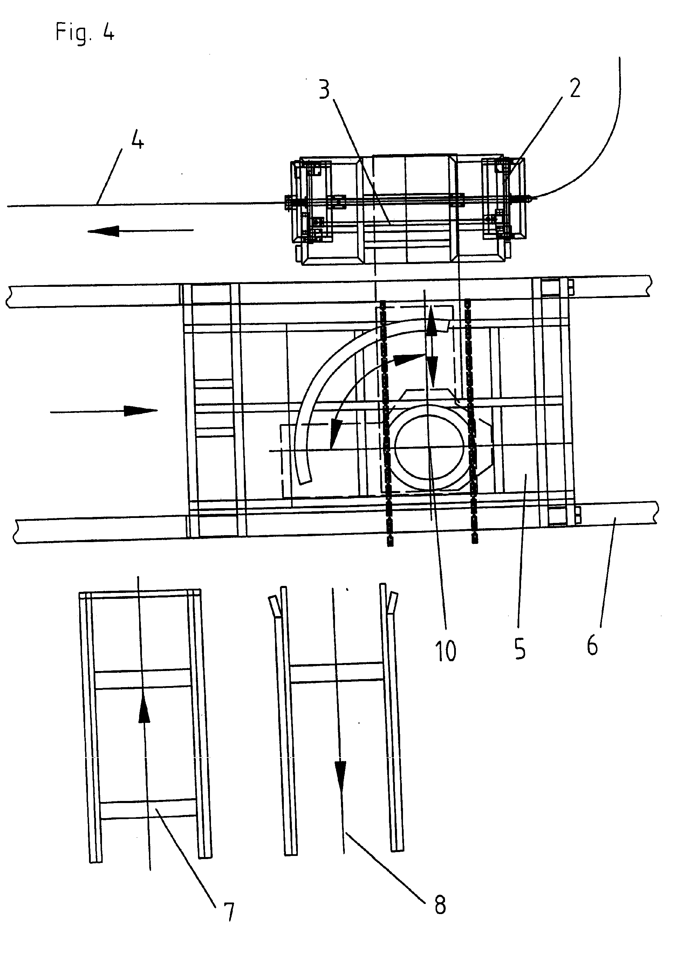

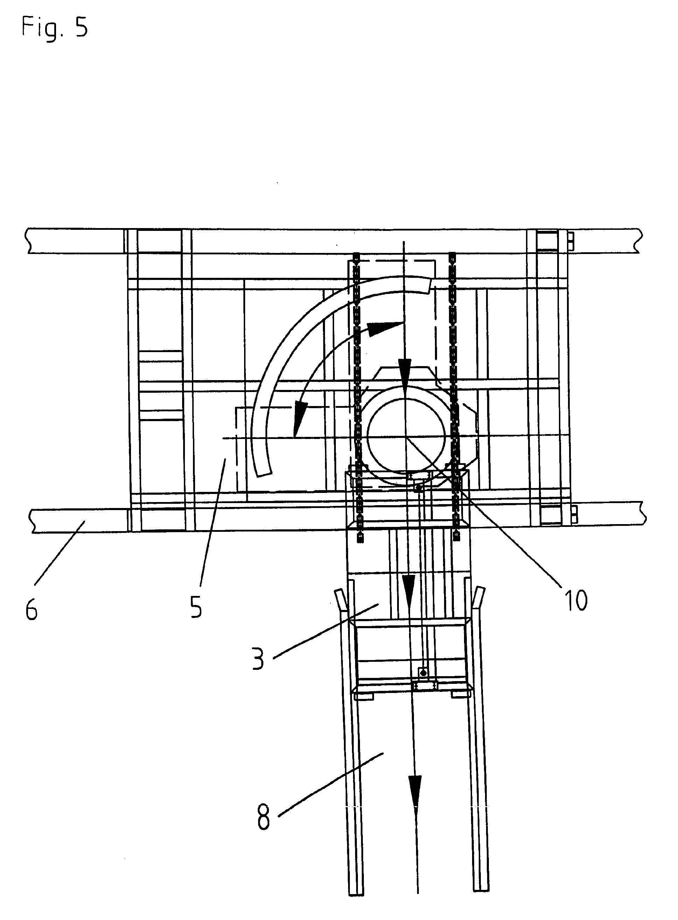

Gemäß der Figuren 1 bis 5 ist im Rahmen einer Nestmontage zwischen einer Bestückungsstation 1 und der Station 7 für die Bereitstellung unbestückter Baugruppen und der Station 8 für die Ablage bestückter Baugruppen ein Shuttle 5 für den Transport und die Übergabe der Baugruppenträgers 3 angeordnet. Die Fahrbahn 6 des Shuttles und die Fahrbahn 4 des Baugruppenträgers 3 in der Bestückungsstaion 1 sind zumindest im Übergabbereich 11 parallel ausgeführt. Auf dem Shuttle 5 ist ein Manipulator 10 zur Positionierung des Baugruppenträgers 3 angeordnet.

Dieser Manipulator 10 ermöglicht die dreidimensionale Bewegung des Baugruppenträgers 3 bei den Übergabeprozessen vom und zum Montagewagen 2 der Bestückungsstation 1 und von der Station 7 für Bereitstellung unbestückter Baugruppen 3 auf den Shuttle 5 sowie vom Shuttle 5 auf die Station 8 für die Ablage bestückter Baugruppen. Sowohl der Antrieb des Shuttles 5 für den Transport des Bauträgers 3 als auch der Manipulator 10 zur Positionierung des Baugruppenträgers 3 auf den Shuttle 5 sind mit Synchronisationseinrichtungen 9 ausgestattet. Im Ausführungsbeispiel erfolgt der Ablauf dadurch, daß zunächst der Shuttle 5 an der Station 7 für die Bereitstellung unbestückter Baugruppen einen Baugruppenträger 3 mit Hilfe des Manipulators 10 übernimmt. Der Shuttle 5 wird danach im Übergabebereich 11 mit der Bewegung des Montagewagens 2 der Bestückungsstation 1 synchronisiert. Danach erfolgt die Übergabe des Baugruppenträgers 3 auf den Montagewagen 2 mit Hilfe des Manipulators 10. Danach wird der Shuttle 5 im Übergabebereich 11 mit einem Montagewagen 2 synchronisiert, der eine in der Bestückungsstation 1 komplettierte Baugruppe transportiert. Mit Hilfe des Manipulators 10 wird der Baugruppenträger 3 dieses Montagewagens 2 vom Shuttle 5 übernommen und zur Station 8 für die Ablage bestückter Baugruppen transportiert. Die Bestückungsstation 1 verfügt über mehrere Montagewagen 2, die während dieser Prozeduren ununterbrochen bewegt werden. Mit Hilfe des Shuttles 5 wird eine wirksame Entkopplung der Nestfertigung in der Bestückungsstation 1 von den vor- und nachgelagerten Prozessen erreicht.

### Ausführungsbeispiel 2:

Gemäß der Figuren 1 bis 5 werden Baugruppenträger 3 zwischen Stationen 7 und 8 für die Bereitstellung unbestückter Baugruppen und für die Ablage bestückter Baugruppen und dem Montagewagen 2 einer Bestückungsstation 1 mit Hilfe eines Shuttles 5 bewegt. Der Antrieb des Shuttles 5 auf der Fahrbahn 6 verfügt über eine Synchronisationseinrichtung 9 für die Grobsynchronisation der Geschwindigkeiten des jeweiligen Montagewagens 2 der Bestückungsstation 1 auf der Fahrbahn 4 mit dem Shuttle 5. Nach dem Erreichen eines annähernden Gleichlaufs erfolgt durch die Synchronisationseinrichtung 9 des Manipulators 10 zur Positionierung des Baugruppenträgers auf den Shuttle die Feinsynchronisation des Bewegungsablaufs zwischen dem Montagewagen 2 der Bestückungsstation 1 und dem Manipulator 10. Hierbei läßt sich eine deutliche Beschleunigung des Bewegungsablaufs und damit eine Verkürzung der Taktzeiten erreichen.

### System zum automatischen Zu- und Abführen von Kfz-Baugruppen an Bestückungsstationen

### Bezugszeichenliste

- 1: Bestückungsstation
- 2: Montagewagen
- 3: Baugruppenträger
- 4: Fahrbahn des Baugruppenträgers in der Bestückungsstation
- 5: Shuttle für den Transport des Baugruppenträgers
- 6: Fahrbahn des Shuttles
- 7: Station für die Bereitstellung unbestückter Baugruppen
- 8: Station für die Ablage bestückter Baugruppen
- 9: Synchronisationseinrichtung
- 10: Manipulator zur Positionierung des Baugruppenträgers auf dem Shuttle
- 11: Übergabebereich

## Patentansprüche

1. Vorrichtung zum automatischen Zu- und Abführen von Kfz-Baugruppen an Bestückungsstationen (1) mit einer eigenen Fahrbahn (4) für die Baugruppenträger (3), mit einer Übergabevorrichtung für Baugruppen von Stationen (7, 8) für die Bereitstellung unbestückter Baugruppen zur Bestückungsstation (1) und für bestückte Baugruppen von der Bestückungsstation (1) zu einer Station (8) für die Ablage bestückter Baugruppen, **dadurch gekennzeichnet,**
**daß** zwischen der Bestückungsstation, (1) und den Stationen (7, 8) für die Bereitstellung unbestückter Baugruppen sowie für die Ablage bestückter Baugruppen ein Shuttle (5) angeordnet ist,
**daß** der Shuttle (5) auf einer einlinigen Fahrbahn (6) positioniert ist,
**daß** der Shuttle (5) mit eigenem Antrieb ausgestattet ist,
**daß** der Shuttle (5) mit einer Synchonisationseinrichtung (9) ausgestattet ist daß auf dem Shuttle (5) ein Manipulator (10) zur Positionierung des Baugruppenträgers (3) angeordnet ist und
**daß** der Manipulator (10) mit Einrichtungen für die dreidimensionale Bewegung des Baugruppenträgers (3) ausgestattet ist.

2. Vorrichtung zum automatischen Zu- und Abführen von Kfz-Baugruppen an Bestückungsstationen (1) nach dem Anspruch 1, **dadurch gekennzeichnet, daß** der Manipulator (10) wenigstens in seiner parallel zur Fahrbahn (6) des Shuttles (5) möglichen Bewegungsrichtung mit Einrichtungen für die Feinsynchronisation ausgestattet ist.

3. Vorrichtung zum automatischen Zu- und Abführen von Kfz-Baugruppen an Bestückungsstationen (1) nach einem der Ansprüche 1 und 2, **dadurch gekennzeichnet, daß** für die Übergabe und Übernahme von Baugruppenträgern (3) zwischen dem Montagewagen (2) der Bestückungsstation (1) und dem Shuttle (5) ein Übergabebereich (11) angeordnet ist.
